Europäisches Patentamt

European Patent Office

Office européen des brevets

(11) Publication number: **0 083 487**
**B1**

# (12) EUROPEAN PATENT SPECIFICATION

(45) Date of publication of patent specification: **08.10.86**

(51) Int. Cl.⁴: **H 02 J 3/18**

(21) Application number: **82306746.7**

(22) Date of filing: **17.12.82**

(54) **Static VAR generator.**

(30) Priority: **17.12.81 US 331940**

(43) Date of publication of application:
**13.07.83 Bulletin 83/28**

(45) Publication of the grant of the patent:
**08.10.86 Bulletin 86/41**

(84) Designated Contracting States:
**BE CH DE GB LI SE**

(56) References cited:
**US-A-3 999 117**
**US-A-4 188 573**

(73) Proprietor: **WESTINGHOUSE ELECTRIC CORPORATION**
**Westinghouse Building Gateway Center**
**Pittsburgh Pennsylvania 15222 (US)**

(72) Inventor: **Gyugyi, Laszlo**
**333 Stoneledge Drive**
**Pittsburgh Pennsylvania (US)**

(74) Representative: **van Berlyn, Ronald Gilbert**
**23, Centre Heights**
**London, NW3 6JG (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# 0 083 487

## Description

This invention relates to static VAR generators and more particularly to static VAR generators employing controlled inductance means switched in combination with capacitance means into an AC network to regulate power factor and terminal voltage.

The basic function of a static VAR generator is to supply controlled reactive power for an electrical network to reduce terminal voltage variation and to improve load power factor. Inherent in all static VAR generator designs utilizing anti-parallel switching thyristors such as disclosed in US—A—3999117 is a delay in response resulting from the requirement that a sampling of the systems reactive demand must be made plus computations determining the reactive compensation prior to any corrective action. Additionally, after the computations are complete the output current for the VAR generator can be adjusted only once in each half cycle. Consequently, after the first sampling and computation time elapses, if the reactive demand should change suddenly, the VAR generator cannot further adjust its output current until the next half cycle. It would be desirable for a VAR generator design to have the capability to allow further corrective action to be taken in response to any reactive demand change that may occur after the first sampling and computation time interval for each half cycle.

According to the present invention, a static VAR generator comprises a capacitive current generating means connected into an AC network, a first inductive current generating means disposed for connection into said AC network, a VAR monitoring means for monitoring the reactive requirement of said AC network, and a first control means responsive to the AC network voltage and to said VAR monitoring means for controlling connection of said first inductive current generating means into the AC network in synchronism with the AC network voltage in response to the reactive requirements of said AC network, characterised by phase shifting means connected between a second inductive current generating means and the AC network and a second control means responsive to the output voltage of the phase shifting means and to said VAR monitoring means for controlling connection of said second inductive current generating means at a voltage phase angle leading the voltage of said first inductive current generating means in response to the reactive requirements of said AC network.

Conveniently, one inductor bank operates from a set of voltages obtained from a phase shifting transformer that leads AC network voltage from which the other inductor bank is operated. A control signal is derived for each thyristor controlled inductor synchronized to the voltage source at the inductor bank. This control signal contains the information for the required reactive compensation to the AC network. With this arrangement the output current of the VAR generator can be changed twice in each half cycle.

The invention will now be described, by way of example, with reference to the accompanying drawings, in which:

Fig. 1 is a functional block diagram of a static VAR generator connected to an AC network and a rapidly varying load;

Fig. 2 is a vector diagram defining the desired relationship between the voltages supplied to the reactor banks of the VAR generator shown in Fig. 1;

Fig. 3 are wave forms of the three-phase voltages for the reactor banks of the VAR generator shown in Fig. 1 with respective phase firing angles;

Fig. 4 is an example of the three-phase voltages for the reactor banks of the VAR generator shown in Fig. 1, illustrating phase angle firing and conduction intervals;

Fig. 5 is a detailed schematic of the resettable integrator RI utilized in the VAR generator shown in Fig. 1.

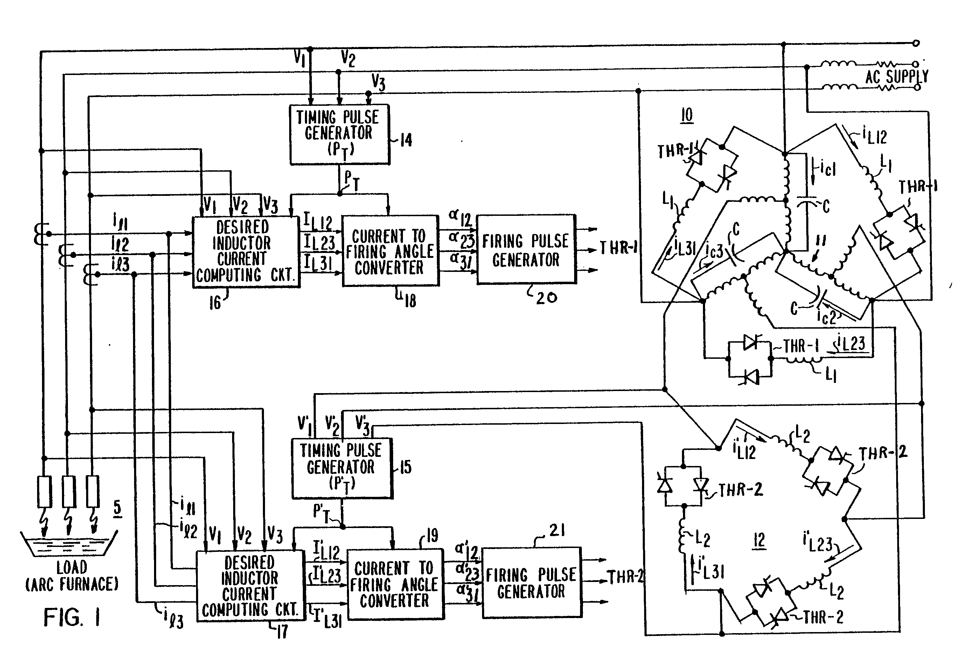

Fig. 1 shows a static VAR generator connected to an AC network and a rapidly varying load such as an arc furnace 5. The VAR generator is comprised of a fixed capacitor bank C connected in a wye configuration to the AC network. A first inductor bank 10 having delta connected inductors $L_1$ is disposed to be switched into the AC network by means of anti-parallel thyristors THR-1. Also connected to the AC network is the input terminals of an auto-transformer 11. A second inductor bank 12 is connected to the output terminals of the auto-transformer 11 having inductors $L_2$ in a delta-configuration in such a manner that the inductors $L_2$ are operated at voltages phase-shifted by 30 electrical degrees. The inductors $L_2$ of the inductor bank 12 are also disposed to be switched into the AC network by means of anti-parallel thyristors THR-2.

The inductors in the two inductor banks 10 and 12 are inserted into the AC network to control reactive power by phase angle firing the thyristors THR-1 and THR-2. Two separate control channels for each inductor bank are employed. Timing pulse generators 14 and 15 provide timing pulses $P_T$ and $P_T'$ synchronized to the voltage supply of the respective inductor bank. The timing pulses $P_T$ obtained from pulse generator 14 are synchronized to the AC network. Similarly, timing pulses $P_T'$ from pulse generator 15 are synchronized to the voltages phase shifted 30 degrees by the auto-transformer 11. The signals $P_T$ and $P_T'$ are inputted into an inductor current computing circuits 16, 17 and current to firing angle converters 18, 19. Two sets of desired inductor currents $I_{L12}$, $I_{L23}$, $I_{L31}$ and $I_{L12}'$, $I_{L23}'$, $I_{L31}'$ are computed during the computation intervals by circuits 16 and 17 for the inductor banks 10 and 12 respectively. Because of the phase shifted voltages $V_{12}'$, $V_{23}'$ and $V_{31}'$ inductor currents $I_{L12}'$, $I_{L23}'$, $I_{L31}'$ are computed 30 electrical degrees earlier than the currents $I_{L12}$, $I_{L23}$ and $I_{L31}$ of the inductor bank 10. From the two sets of computed currents, current-to-firing angle converters 18 and 19 derive firing angles $\alpha_{12}$, $\alpha_{23}$, $\alpha_{31}$ and $\alpha_{12}'$, $\alpha_{23}'$, $\alpha_{31}'$ for the anti-parallel thyristors THR-1 and THR-2 respectively. The output of the firing angle converters 18 and 19 are amplified by firing

2

pulse generators 20 and 21 which directly control the firing of thyristors THR-1 and THR-2. Since the firing angles $\alpha'_{12}$, $\alpha'_{23}$ and $\alpha'_{31}$ of inductor bank 12 lead those of inductor bank 10 by 30 electrical degrees, inductor bank 12 is operated in advanced of inductor bank 10 resulting in overall improvement of response and accuracy in reactive control of the VAR generator.

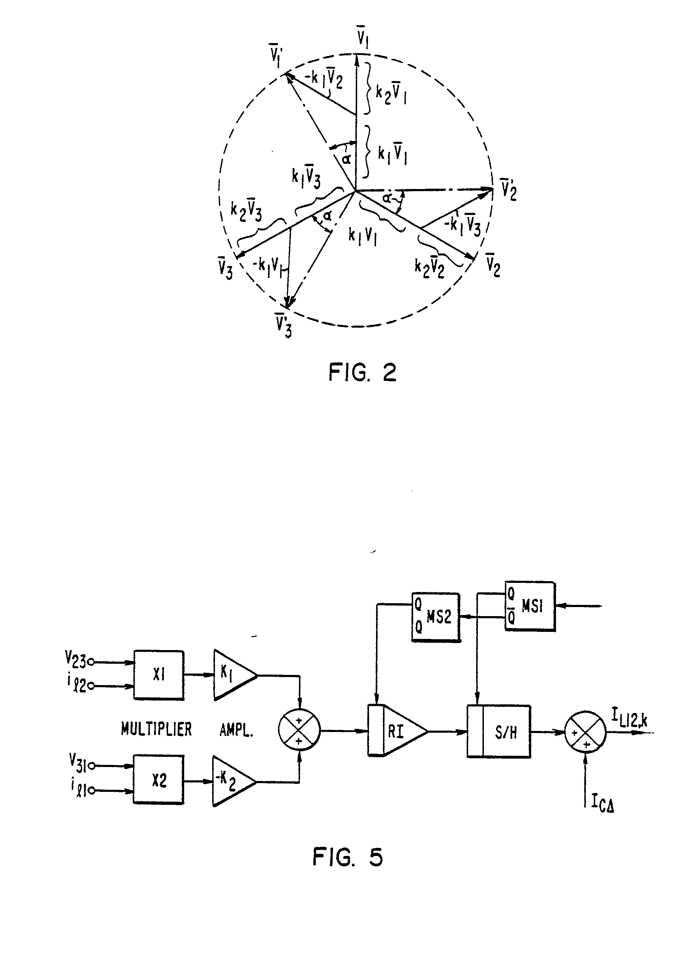

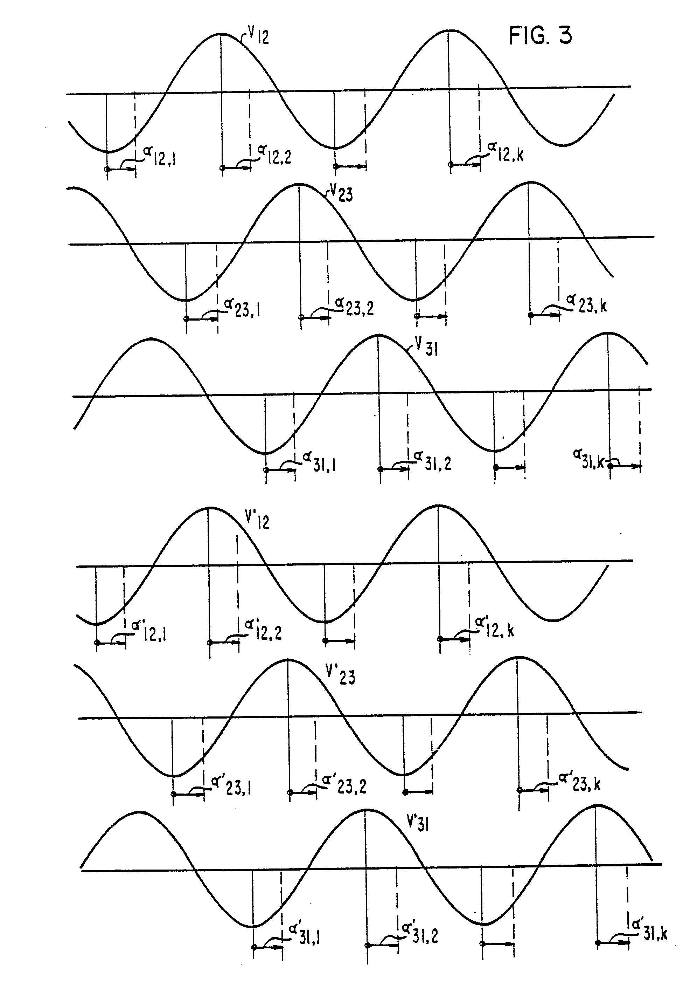

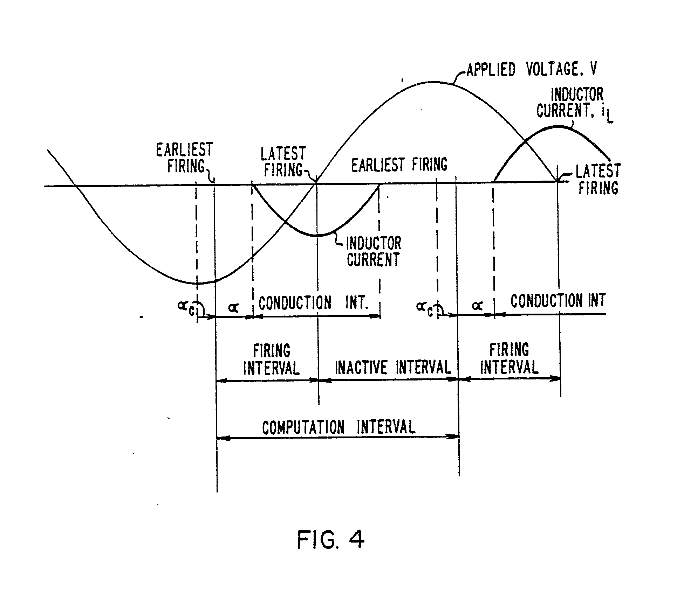

Referring now to Figures 2, 3 and 4 to exploit the possibility that the inductor bank 12 connected to the phase shifting auto-transformer 11 can be operated in advance of the inductor bank 10, it is necessary to compute the desired inductor currents over two different computation intervals. This requirement can be accomplished by using appropriate power quantities in the computation of the desired inductor current. Consider Figure 3 where the two sets of line-to-line voltages $V_{12}$, $V_{23}$, $V_{31}$ and $V'_{12}$, $V'_{23}$ and $V'_{31}$ are shown together with the corresponding sets of firing angles $\alpha_{12}$, $\alpha_{23}$, $\alpha_{31}$ and $\alpha'_{12}$, $\alpha'_{23}$, $\alpha'_{31}$. The computation of the desired inductor currents, which define the firing angles, is carried out between the two subsequent voltage peaks that represent the two subsequent earliest firing points of thyristors THR-2 and THR-1 respectively.

The desired inductor currents of the three branches of the two delta connected inductor banks 10 and 12 can be calculated in any half cycle interval of the applied voltage preceding the earliest firing points by the following equations.

$$I_{L12,k}=I_{C\Delta}-\frac{1}{V\pi}[K_1\int_{\alpha_{12,(k-1)}=0}^{\alpha_{12,k}=0} v_{23}i_{l2}d(\omega t) - K_2\int_{\alpha_{12,(k-1)}=0}^{\alpha_{12,k}=0} v_{31}i_{l1}d(\omega t)] \tag{1}$$

$$I_{L23,k}=I_{C\Delta}-\frac{1}{V\pi}[K_1\int_{\alpha_{23,(k-1)}=0}^{\alpha_{23,k}=0} v_{31}i_{l3}d(\omega t) - K_2\int_{\alpha_{23,(k-1)}=0}^{\alpha_{23,k}=0} v_{12}i_{l2}d(\omega t)] \tag{2}$$

$$I_{L31,k}=I_{C\Delta}-\frac{1}{V\pi}[K_1\int_{\alpha_{31,(k-1)}=0}^{\alpha_{31,k}=0} v_{12}i_{l2}d(\omega t) - K_2\int_{\alpha_{31,(k-1)}=0}^{\alpha_{31,k}=0} v_{23}i_{l3}d(\omega t)] \tag{3}$$

$$I'_{L12,k}=I_{C\Delta}-\frac{1}{V\pi}[K_1\int_{\alpha'_{12,(k-1)}=0}^{\alpha'_{12,k}=0} v_{23}i_{l3}d(\omega t) - K_2\int_{\alpha'_{12,(k-1)}=0}^{\alpha'_{12,k}=0} v_{31}i_{l2}d(\omega t)] \tag{4}$$

$$I'_{L23,k}=I_{C\Delta}-\frac{1}{V\pi}[K_1\int_{\alpha'_{23,(k-1)}=0}^{\alpha'_{23,k}=0} v_{31}i_{l3}d(\omega t) - K_2\int_{\alpha'_{23,(k-1)}=0}^{\alpha'_{23,k}=0} v_{12}i_{l2}d(\omega t)] \tag{5}$$

$$I'_{L31,k}=I_{C\Delta}-\frac{1}{V\pi}[K_1\int_{\alpha'_{31,(k-1)}=0}^{\alpha'_{31,k}=0} v_{12}i_{l3}d(\omega t) - K_2\int_{\alpha'_{31,(k-1)}=0}^{\alpha'_{31,k}=0} v_{23}i_{l2}d(\omega t)] \tag{6}$$

where $I_{C\Delta}$ is the amplitude of the fixed capacitor current, referred to delta connection, that is

$$I_{C\Delta}=\frac{V}{3}\omega C$$

V is the amplitude of the line-to-line voltage in both the AC supply and auxiliary voltage sets
C is the capacitance of one branch of the (wye connected) capacitor bank
$\omega$ is the angular frequency of the AC supply

$$K_1=\frac{R_s}{3\omega L_s}-\frac{1}{\sqrt{3}} \qquad\qquad K_2=\frac{R_s}{3\omega L_s}-\frac{1}{\sqrt{3}}$$

$v_{12}$, $v_{23}$, $v_{31}$ are the line-to-line voltages of the three-phase AC supply

$v'_{12}$, $v'_{23}$, $v'_{31}$ are the line-to-line auxiliary voltages obtained at the terminals of the phase shifting transformer

$i_{l1}$, $i_{l3}$, $i_{l3}$ are the three load (line) currents

$\alpha_{12,k}$, $\alpha_{23,k}$, $\alpha_{31,k}$ are the firing angles measured from the kth peak of voltage $v_{12}$, $v_{23}$, and $v_{31}$, respectively

$\alpha'_{12,k}$, $\alpha'_{23,k}$, $\alpha'_{31,k}$ are the firing angles measured from the kth peak of auxiliary voltage $v'_{12}$, $v'_{23}$ and $v'_{31}$, respectively

$\alpha_{12,k}=0$, $\alpha_{23,k}=0$, $\alpha_{31,k}=0$, $\alpha'_{12,k}=0$, $\alpha'_{23,k}=0$, $\alpha'_{31,k}=0$, define the earliest firing points, which, in the present case coincide with the kth peak of the corresponding voltages

From the desired inductor currents, the corresponding firing angles can be determined from the following relationships:

$$I_{L12,k} = \frac{4}{\pi}\frac{\pi V}{\omega L}[\frac{\pi}{2} - \alpha_{12,k} - \frac{1}{2}\sin(2\,\alpha_{12,k})] \tag{7}$$

$$I_{L23,k} = \frac{4}{\pi}\frac{\pi V}{\omega L}[\frac{\pi}{2} - \alpha_{23,k} - \frac{1}{2}\sin(2\,\alpha_{23,k})] \tag{8}$$

$$I_{L31,k} = \frac{4}{\pi}\frac{\pi V}{\omega L}[\frac{\pi}{2} - \alpha_{31,k} - \frac{1}{2}\sin(2\,\alpha_{31,k})] \tag{9}$$

and,

$$I'_{L12,k} = \frac{4}{\pi}\frac{\pi V}{\omega L}[\frac{\pi}{2} - \alpha'_{12,k} - \frac{1}{2}\sin(2\,\alpha'_{12,k})] \tag{10}$$

$$I'_{L23,k} = \frac{4}{\pi}\frac{\pi V}{\omega L}[\frac{\pi}{2} - \alpha'_{23,k} - \frac{1}{2}\sin(2\,\alpha'_{23,k})] \tag{11}$$

$$I'_{L31,k} = \frac{4}{\pi}\frac{\pi V}{\omega L}[\frac{\pi}{2} - \alpha'_{31,k} - \frac{1}{2}\sin(2\,\alpha'_{31,k})] \tag{12}$$

Referring again to Figure 1 control circuits for the timing pulse generators 14, 15; the inductor current computing circuits 16, 17; the current-to-firing angle convertor 18, 19; and the firing pulse generator 20, 21 are described in the specification of US—A—3,999,117. The inductor current computing circuits 16 and 17 further incorporates an improvement to the resettable integrator RI that provides improved response based on the equations 1—6 herein recited.

Figure 5 gives a detailed circuit design of the resettable integrator RI incorporated in the inductor computing circuits 16 and 17. The circuit shown aids in the computation of the desired inductor current $I_{L12}$, using input quantities $V_{23}$, $i_{l2}$ and $V_{31}$, $i_{l1}$ as given by equation (1). To calculate $I_{L23}$ and $I_{L31}$ according to equations (2) and (3), two more identical circuits, with input quantities $V_{31}$, $i_{l3}$, $V_{12}$, $i_{l2}$ and $V_{12}$, $i_{l1}$, $V_{23}$, $i_{l2}$, are needed. Similarly, to calculate $I'_{L12}$, $I'_{L23}$, and $I'_{L31}$ for the auxiliary inductor banks according to equations (4), (5), and (6), three additional circuits of this type are needed. These circuits can be operated in synchronism with the auxiliary voltages $V'_{12}$, $V'_{23}$, and $V'_{31}$.

This invention is an improved static VAR generator design that allows the reactive power to be adjusted twice as often in any cycle that compensation is demanded.

## Claims

1. A static VAR generator comprising a capacitive current generator means (C) connected into an AC network, a first inductive current generating means (10) disposed for connection into said AC network, a VAR monitoring means (16, 17) for monitoring the reactive requirements of said AC network, and a first control means (14, 18, 20, THR-1) responsive to the AC network voltage and to said VAR monitoring means (16, 17) for controlling connection of said first inductive current generating means (10) into the AC network in synchronism with the AC network voltage in response to the reactive requirements of said AC network, characterised by phase shifting means (11) connected between a second inductive current generating means (12) and the AC network and a second control means (15, 19, 21, THR-2) responsive to the output voltage of the phase shifting means (11) and to said VAR monitoring means (16, 17) for controlling connection of said second inductive current generating means (12) at a voltage phase angle leading the voltage of said first inductive current generating means (10) in response to the reactive requirements of said AC network.

2. A static VAR generator as claimed in claim 1 wherein said voltage phase angle leading the voltage of said first inductive current generating means (10) is approximately 30 electric degrees.

3. A static VAR generator as claimed in claim 1 or 2 wherein said phase shifting means is an auto-transformer (11) having a primary connected to said AC network and a secondary connected to said second control means (15, 19, 21, THR-2) and said second inductive current generating means (12) so that said second control means controls connection of said second inductive current generating means (12) at a voltage phase angle leading the voltage of said first inductive current generating means (10).

### Patentansprüche

1. Statischer Blindleistungsgenerator (VAR Generator), enthaltend eine kapazitive Stromerzeugungsvorrichtung (6), die mit einem Wechselstromnetz verbunden ist, eine erste induktive Stromerzeugungsvorrichtung (20), die an das Wechselstromnetz anschließbar ist, eine VAR Überwachungsvorrichtung (16, 17) zum Überwachen der Blindleistunganforderungen des Wechselstromnetzes und erste Steuervorrichtungen (14, 18, 20, THR-1), die auf die Spannung des Wechselstromnetzes und auf die VAR Überwachungsvorrichtung (16, 17) ansprechen, um den Anschluß der ersten induktiven Stromerzeugungsvorrichtung (10) an das Wechselstromnetz synchron zur Spannung des Wechselstromnetzes und entsprechend den Blindleistungsanforderungen des Wechselstromnetzes zu steuern, gekennzeichnet durch Phasenschiebevorrichtungen (11), die zwischen einer zweiten induktiven Stromerzeugungsvorrichtung (12) und dem Wechselstromnetz geschaltet sind, und eine zweite Steuervorrichtung (15, 19, 21, THR-2), die auf die Ausgangsspannung der Phasenschiebevorrichtungen (11) und die VAR Überwachungsvorrichtung (16, 17) anspricht, um den Anschluß der zweiten induktiven Stromerzeugungsvorrichtung (12) bei einem Spannungsphasenwinkel zu steuern, welcher der Spannung der ersten induktiven Stromerzeugungsvorrichtung (10) als Antwort auf die Blindleistungsanforderungen des Wechselstromnetzes voreilt.

2. Statischer VAR Generator nach Anspruch 1, bei dem der Spannungsphasenwinkel, welcher der Spannung der ersten induktiven Stromerzeugungsvorrichtung (10) voreilt, unfefähr 30 Grade beträgt.

3. Statischer VAR Generator nach Anspruch 1 oder 2, bei dem die Phasenschiebevorrichtungen einen Autotransformer (11) darstellen, der mit einem Primäranschluß an das Wechselstromnetz und mit einem Sekundäranschluß an die zweite Steuervorrichtung (15, 19, 21, THR-2) und die zweite induktive Stromerzeugungsvorrichtung (12) angeschlossen ist, so daß die zweite Steuervorrichtung den Anschluß der zweiten induktiven Stromerzeugungsvorrichtung bei einem Spannungsphasenwinkel steuert, welcher der Spannung der ersten induktiven Stromerzeugungsvorrichtung (10) voreilt.

### Revendications

1. Générateur statique de puissance réactive, comprenant un dispositif générateur de courant capacitif (C) connecté dans un réseau à courant alternatif, un premier dispositif générateur de courant inductif (10) disposé pour une connexion dans ce réseau à courant alternatif, un dispositif de contrôle de puissance réactive (16, 17) pour contrôler les besoins réactifs du réseau à courant alternatif, et un premier dispositif de commande (14, 18, 20, THR-1) sensible à la tension du réseau à courant alternatif et au dispositif de contrôle de puissance réactive (16, 17) afin de commander la connexion du premier dispositif générateur de courant inductif (10) dans le réseau à courant alternatif en synchronisme avec la tension du réseau à courant alternatif en réponse aux besoins réactifs de ce réseau à courant alternatif, caractérisé par des moyens de déphasage (11) connectés entre un second dispositif générateur de courant inductif (12) et le réseau à courant continu, et un second dispositif de commande (15, 19, 21, THR-2) sensible à la tension de sortie des moyens de déphasage (11) et au dispositif de contrôle de puissance réactive (16, 17) afin de commander la connexion du second dispositif générateur de courant inductif (12) à un angle de phase de tension en avance sur la tension du premier dispositif générateur de courant inductif (10) en réponse aux besoins réactifs du réseau à courant alternatif.

2. Générateur statique de puissance réactive suivant la revendication 1, caractérisé en ce que l'angle de phase de tension en avance sur la tension du premier dispositif générateur de courant inductif (10) est d'approximativement 30 degrés électriques.

3. Générateur statique de puissance réactive suivant la revendication 1 ou 2, caractérisé en ce que les moyens de déphasage sont un autotransformateur (11) possédant un primaire connecté au réseau à courant alternatif et un secondaire connecté au second dispositif de commande (15, 19, 21, THR-2) et au second dispositif générateur de courant inductif (12), de telle sorte que le second dispositif de commande commande la connexion du second dispositif générateur de courant inductif (12) à un angle de phase de tension en avance sur la tension du premier dispositif générateur de courant inductif (10).

FIG. I

FIG. 2

FIG. 5

FIG. 3

0 083 487

FIG. 4